# EUROPÄISCHE PATENTSCHRIFT

(11) **EP 4 045 816 B1**
(45) Veröffentlichungstag und Bekanntmachung des Hinweises auf die Patenterteilung: **08.11.2023**
(21) Anmeldenummer: 20771780.2
(22) Anmeldetag: 03.09.2020
(51) Int. Cl.: F16G 1/28, F16H 7/02, F16H 55/17, F16H 55/18

(54) **ZAHNRIEMENTRIEB MIT VARIIERENDER ZAHNTEILUNG**
TOOTHED BELT DRIVE WITH VARYING TOOTH PITCH
TRANSMISSION PAR COURROIE CRANTÉE À PAS DE CRAN VARIABLE

(30) Priorität: 17.10.2019 DE 102019215965
(43) Veröffentlichungstag der Anmeldung: 24.08.2022
(73) Patentinhaber: ContiTech Antriebssysteme GmbH, 30165 Hannover (DE)
(72) Erfinder: MELZ, Thomas, 30165 Hannover (DE); SATTLER, Heiko, 30165 Hannover (DE)
(74) Vertreter: Continental Corporation
(86) Internationale Anmeldenummer: PCT/EP2020/074569
(87) Internationale Veröffentlichungsnummer: WO 2021/073801

(56) Entgegenhaltungen:
- EP-A1- 0 463 554
- EP-A1- 1 614 933
- EP-A1- 2 803 879
- EP-B1- 1 614 933
- AU-B2- 536 178
- DE-A1- 3 833 989

## Beschreibung

Die Erfindung betrifft einen Zahnriementrieb mit einem Zahnriemen und mindestens zwei Zahnscheiben, wobei der Zahnriemen mindestens eine mit einem Zahnprofil versehene Antriebsseite aufweist, der Zahnriemen die Zahnscheiben über einen Teilbereich ihres Umfangs umschlingt und die Zähne des Zahnriemens in die Zahnlücken der Zahnscheiben kämmend eingreifen.

Eine der Herausforderungen bei der Auslegung solcher Zahnriementriebe besteht darin, möglichst leise laufende Zahnriementriebe bereitzustellen und Geräuschbildung möglichst zu reduzieren. Laufgeräusche ergeben sich insbesondere durch die konstruktiven und geometrischen Verhältnisse beim Eingriff der Zähne in die Zahnriemenscheibe und die dadurch entstehenden Vibrationen und Schwingungen im Trum. Auch wenn bereits eine Geräuschreduzierung durch den Übergang von geradverzahnten Zahnriementrieben auf schrägverzahnte Zahnriementriebe möglich ist, so sind auch die dort noch vorhandenen Geräuschemissionen erheblich und nicht gewünscht.

Nach aktuellem Stand der Technik werden Zahnriemen auf Vulkanisationsformen gefertigt, die eine möglichst exakt und gleichmäßig gefertigte Zahnteilung über ihren Umfang besitzen und die diese dann auch auf zu vulkanisierenden Riemenrohlinge übertragen. Durch diese gleich bleibende, regelmäßige Teilung kommt es im Betrieb beim Zahneingriff des Riemens in die ebenso regelmäßig gefertigten Zahnscheiben zu einer prägnanten Geräuschentwicklung, ausgelöst im Wesentlichen durch eine Schwingung in der Zahneingriffsfrequenz, deren Schallleistungspegel hörbar und messbar ist. Die Energie dieser Schwingung wird direkt als Luftschall abgestrahlt oder als Körperschall weitergeleitet und andernorts indirekt abgestrahlt.

Um einen geringen Pegel in der Zahneingriffsfrequenz zu erreichen, ist es im Stand der Technik beispielsweise bekannt, Gruppen von unterschiedlich ausgebildeten Teilungen zu bilden und diese "Teilungsgruppen" über die Länge bzw. den Umfang des Riemens so zu arrangieren, dass eine einheitliche Zahneingriffsfrequenz nicht aufgebaut werden kann oder dass sich auslöschende Interferenzen entstehen. Bei einer solchen so genannten "Low-Noise-Verzahnung" können die einzelnen Gruppen sich in der Teilung um bis zu 20 % unterscheiden. Dementsprechend muss natürlich auch die Teilung der Zahnscheiben in Form von Gruppen angepasst sein. Dadurch entsteht auch ein wesentlicher Nachteil dieser Verzahnungsart. Dieser liegt darin, dass eine absolut präzise und angepasste Montage des Riementriebs mit einander exakt entsprechenden Teilungsgruppen auf der Zahnscheibe und an dem Zahnriemen erfolgen muss, was den Einbau natürlich erschwert und sehr fehleranfällig macht. Es muss immer ein Vielfaches einer Gruppe von Zähnen zueinander passend an Riemen und an Zahnscheibe vorhanden sein und der Riemen entsprechend aufgelegt werden. Ein weiterer Nachteil ergibt sich dadurch, dass bei einem Überspringen des Riemens, etwa bei Überlastung, der Riemen sofort zerstört wird, wenn unterschiedliche Teilungsgruppen zwangsweise ineinander eingreifen müssen.

Auf der anderen Seite gibt es im Stand der Technik Vorschläge, die Geräuschentwicklung durch Veränderung des Zahnspiels zu verringern. Die EP 1 614 933 B1 offenbart hierzu einen schrägverzahnten Riementrieb, bei dem Geräusch und Vibration dadurch reduziert werden sollen, dass das Spiel, d.h. die Lückenluft (Backlash "D") zwischen dem schrägverzahnten Riemen und einer Zahnscheibe in einem bestimmten Verhältnis zur Zahnteilung bei einem bestimmten Zahnsteigungswinkel und vorgegebener Breite des Zahnriemens eingestellt wird. Ähnliche Maßnahmen schlägt die EP 2 803 879 A1 vor, insbesondere zur Geräuschreduzierung bei Zahnriementrieben in elektrischen Lenkkraftverstärkungen. Auch hier wird die Lückenluft, das Zahnspiel, in Abhängigkeit von Zahnbreite und Zahnhöhe eingestellt.

Die Profilauslegung von Zahnscheiben als Gegenstück zu Zahnriemen und deren Profil in schrägverzahnten Zahnriementrieben sieht also stets ein gewisses Spiel, d.h. eine gewisse "Lückenluft" vor, allein schon deshalb, um eine gewisse Verschieblichkeit des Riemens gegen die Zahnscheibe in Umfangsrichtung zu gewährleisten und damit Fertigungstoleranzen des Riemens sowie sich ändernde Zugkräfte und daraus resultierende unterschiedliche Teilungslängen im Umschlingungsbogen auszugleichen. Dabei ist es das übergeordnete Ziel, das Spiel so auszubilden, dass ein störungsfreies Einlaufen des Zahnriemens in beide Zahnscheiben erreicht wird, um das Entstehen von Luft- und Körperschall zu minimieren.

Bei einem Zusammenspiel von größeren und kleineren Zahnscheiben, insbesondere also in Zahnriementrieben für größere Übersetzungsverhältnisse, sind jedoch die im Stand der Technik bekannten Maßnahmen zur Reduzierung von Luft- oder Körperschall bei Zahnriementrieben nicht mehr ausreichend. Insbesondere bei Zahnriementrieben, die Übersetzungen / Untersetzungen aufweisen und etwa die Drehzahl von Antrieb zu Abtrieb herabsetzen, sind die genannten Maßnahmen schon deswegen nicht ausreichend, weil sich die Eingriffsverhältnisse beim Einlaufen in eine kleine Zahnscheibe / Ritzel sich wesentlich von denen beim Einlaufen in eine größere Zahnscheibe unterscheiden.

Für die Erfindung bestand also die Aufgabe, einen Riementrieb bereitzustellen, der möglichst geräuscharm und im Eingriff stoßarm läuft, auch bei hohen Drehzahlen wenig Vibrationen und Schwingungen im Trum erzeugt, der keine Teilungsgruppen erfordert und der einfach montiert und ohne Ansehen der Laufrichtung und Umfangsposition eingebaut werden kann.

Gelöst wird diese Aufgabe durch die Merkmale des Hauptanspruchs. Weitere vorteilhafte Ausbildungen sind in den Unteransprüchen offenbart.

Dabei ist mindestens eine der Verzahnungen an Riemen oder Scheibe mit einer Folge variierender Zahnteilungen ausgebildet ist, wobei
- die Zahnteilungen von Riemen oder Scheibe entlang der Umfangsrichtung relativ zur jeweiligen mittleren Zahnteilung wie der Nennteilung auf Höhe der durch die Cordmitte bestimmten Cord-Wirklinie, der Eingriffsteilung auf Höhe des Scheibenkopfkreises und der Teilung bei mittlerer Zahnhöhe bis maximal 5% variierend ausgebildet sind und
- die absolute Abweichung dieser variierenden Zahnteilungen von der mittleren Zahnteilung an Riemen oder Scheibe durch die absolute Lückenluft (Backlash) begrenzt ist, wobei die Lückenluft definiert ist als die Differenz aus der Breite einer Zahnlücke der Scheibe und der Breite des eingreifenden Riemenzahns auf Mitte der Zahnhöhe.

Die Nennteilung P von Zahnriemen und Zahnscheibe ist dabei die Teilung auf der Höhe der Cord-Wirklinie, d.h. auf dem Radius oder Bogen, der durch die Mitte der Corde (Cordmitte) des die Zahnscheibe umschlingenden Zahnriemens festgelegt wird. Die Nennteilungslinie bzw. der Nennteilungsbogen liegt also radial außerhalb der Zähne der Zahnscheibe, d.h. außerhalb des Zahnkopfkreises der Zahnscheibe.

Die erfindungsgemäße Variation der Zahnteilungen reduziert Körperschall und Trumschwingungen und damit den Schallleistungspegel erheblich, indem Folgen von Zahneingriffen mit verschiedenen Abweichungen von der Nennteilung auf die Überlagerung ihrer Impulse beim Riemeneinlauf in eine Zahnscheibe spektral vorausberechnet berechnet werden und die (beste) Folge zur Fertigung am Riemen oder der Zahnscheibe ausgewählt wird, bei der der Pegel der Zahneingriffsordnung minimiert wird, wobei als Nebenbedingung die Pegel der Nebenordnungen die Zahneingriffsordnung nicht überschreiten.

Die zulässige Lückenluft begrenzt dabei die Variation der erfindungsgemäßen Zahnteilung prinzipiell als Obergrenze, wobei die Lückenluft dabei definiert ist als Freiraum zwischen Riemenzahn und zwei benachbarten Zahnscheibenzähnen entlang des Eingriffsbogens auf halber Zahnhöhe des Riemens. Die erfindungsgemäße Ausbildung des Zahnriementriebs führt dazu, dass eine erhebliche Reduktion des Schallleistungspegels der üblicherweise monotonen, stark dominierenden Zahneingriffsfrequenz erzielt werden kann.

Eine vorteilhafte Weiterbildung der Erfindung besteht darin, dass die sich verändernde Zahnteilung an Riemen oder Scheibe periodisch oder nach einem vorgegebenen Muster ausgebildet ist. Mit einer solchen Ausbildung nähert man sich zwar dem Grundgedanken der im Stand der Technik bekannten Low-Noise-Verzahnung an, ohne jedoch die dabei existierenden Nachteile - die durch die Bildung von Teilungsgruppen entstehen - in Kauf nehmen zu müssen. Die periodische oder sich nach einem vorgegebenen Muster variierende Zahnteilung führt zu einer weiteren Unterdrückung der Geräuschbildung bzw. zu einer auslöschenden Interferenz bei dennoch entstehenden Schwingungen.

Eine weitere vorteilhafte Ausbildung der Erfindung besteht darin, dass die variierende Zahnteilung an Riemen oder Scheibe in positiver oder negativer Richtung ausgebildet ist, also im Hinblick auf die mittlere Teilung zu einer vergrößerten und/oder einer verringerten Teilung führt. Beide Arten der Variation können den Schallleistungspegel erheblich erniedrigen.

Eine weitere vorteilhafte Ausbildung der Erfindung besteht darin, dass der Zahnriemen oder die Zahnscheibe mit einer variierenden Zahnteilung und der jeweils andere Teil mit einer regelmäßigen Zahnteilung ausgebildet sind. Das erweitert die Möglichkeiten zur Reduzierung der Geräuschentwicklung und kann noch dadurch gesteigert werden, dass im Rahmen einer weiteren vorteilhaften Ausbildung der Zahnriemen und die Zahnscheibe mit einer variierenden Zahnteilung ausgebildet sind. So kann also der Riementrieb je nach Anwendung exakt auf die erforderliche Geräuschreduzierung angepasst werden. Das ist insbesondere dann wichtig, wenn ein solcher Zahnriementrieb in elektrischen Lenkverstärkergetrieben in Kraftfahrzeugen eingesetzt wird, insbesondere ausgebildet mit einer Schrägverzahnung.

Eine weitere vorteilhafte Ausbildung der Erfindung besteht darin, dass die Folge variierender Zahnteilungen so gewählt wird, dass sich ein möglichst niedriger Pegel in der Zahneingriffsordnung ergibt.

Eine weitere vorteilhafte Ausbildung der Erfindung besteht darin, dass die Pegel der der Zahneingriffsordnung benachbarten Ordnungen diese nicht übersteigen.

Anhand eines Ausführungsbeispiels soll die Erfindung näher erläutert werden. Es zeigen
- Fig. 1: Eine prinzipielle Darstellung des erfindungsgemäßen Riementriebs,
- Fig. 2: die Eingriffsverhältnisse zwischen Zahnriemen und Zahnscheibe bei Teilungsvariation am Zahnriemen in einer vergrößerten Darstellung,
- Fig. 3: die Lückenluft als Spiel bzw. Differenz der Lücke zwischen zwei benachbarten Zahnscheibenzähnen und einem Riemenzahn auf halber Zahnhöhe des Riemens in einer vergrößerten Darstellung,
- Fig. 4: ein Diagramm mit spektralem Vergleich von Schallleistungspegeln in der Zahneingriffsordnung (ZEO) und Nebenordnungen mit Absenkung des Pegels der Zahneingriffsordnung durch eine Folge gegenüber regelmäßiger Teilung variierender Teilungen,
- Fig. 5: ein Diagramm mit spektralem Vergleich von Schallleistungspegeln in der Zahneingriffsordnung (ZEO) und Nebenordnungen mit Absenkung des Pegels der Zahneingriffsordnung und Begrenzung der Nebenordnungspegel auf den Pegel der Zahneingriffsordnung durch eine andere, verbesserte Folge gegenüber regelmäßiger Teilung variierter Teilungen.

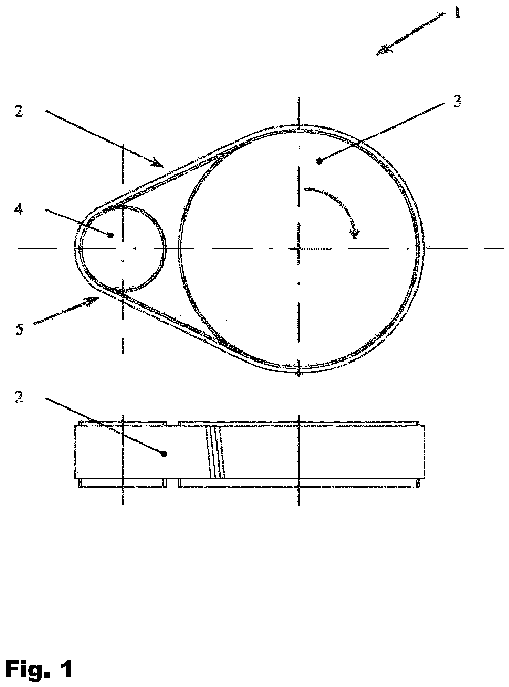

Fig. 1 zeigt einen schrägverzahnten Zahnriementrieb 1 mit einem Zahnriemen 2, einer großen Zahnscheibe 3 als Abtriebsscheibe und einer kleinen Zahnscheibe 4 als Antriebsscheibe. Im Einlaufbereich 5 läuft der Zahnriemen 2 mit seiner mit einem Zahnprofil versehene Antriebsseite auf die kleine Zahnscheibe 4 auf. Die kleine Zahnscheibe 4 weist ein zum Zahnprofil des Riemens komplementäres Zahnprofil auf, wobei der Zahnriemen die Zahnscheiben über einen Teilbereich ihres Umfangs umschlingt und die Zähne des Zahnriemens in die Zahnlücken der Zahnscheiben kämmend eingreifen. Dasselbe gilt entsprechend für die große Zahnscheibe 3.

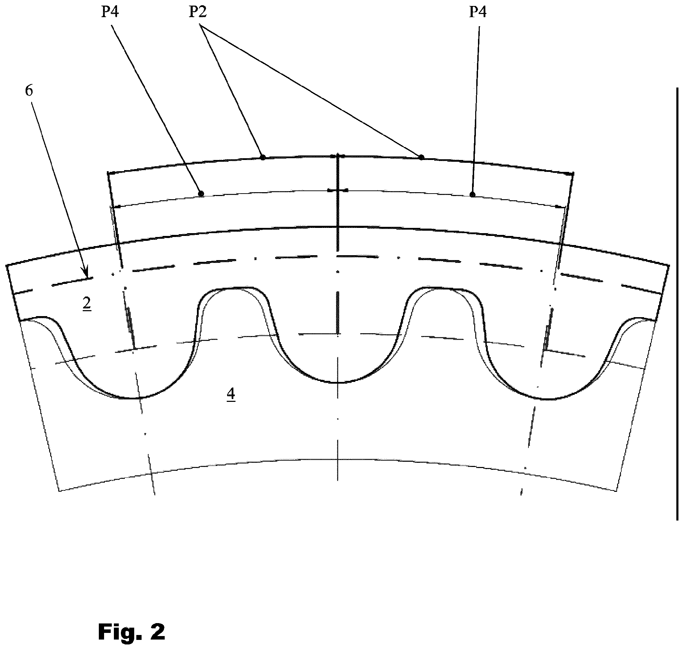

Fig. 2 zeigt die in der erfindungsgemäßen Ausbildung nach Anspruch 1 vorhandenen Eingriffsverhältnisse zwischen Zahnriemen 2 (Volllinie) und Zahnscheibe 4 (dünne Linie) in einer vergrößerten Darstellung, wobei die Zahnscheibe 4 mit regelmäßiger Teilung P4, der Zahnriemen 2 hingegen mit variierender Teilung P2 ausgeführt ist. Dargestellt sind der der Nennteilung P auf Cordmitte 6 entsprechende regelmäßige Teilungswinkel an der Zahnscheibe 4 und zwei dem gegenüber variierte Teilungswinkel am Zahnriemen 2. Die Nennteilung P auf Cordmitte ist der besseren Übersicht halber in dieser Figur nicht dargestellt. Auf jedem radialen Niveau, ob auf Cordmitte, Kopfkreis der Zahnscheibe oder Mitte der Zahnhöhe, sind die jeweils ineinander eingreifenden Teilungen (oder Bogenlängen) von Zahnscheibe 4 und Zahnriemen 2 damit zueinander unterschiedlich.

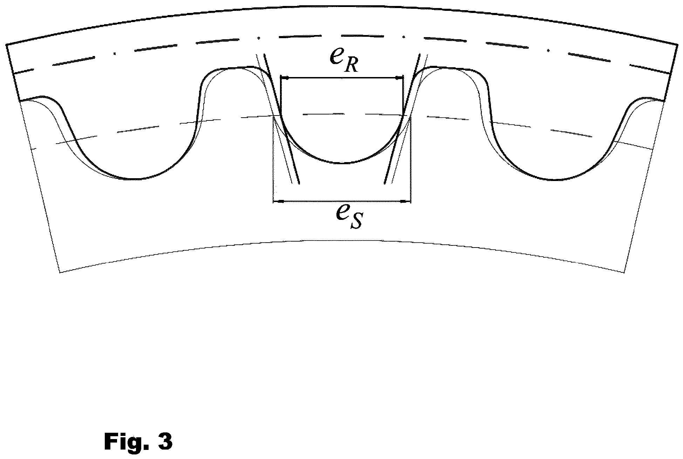

In der Figur 3 ist die absolute Lückenluft dargestellt, auch Spiel oder international "*Backlash*" genannt, dargestellt. Diese ist die Differenz aus der Breite einer Zahnlücke *e_{S}* der Scheibe 4 und der Breite des eingreifenden Riemenzahns *e_{R}* auf Mitte der Zahnhöhe.

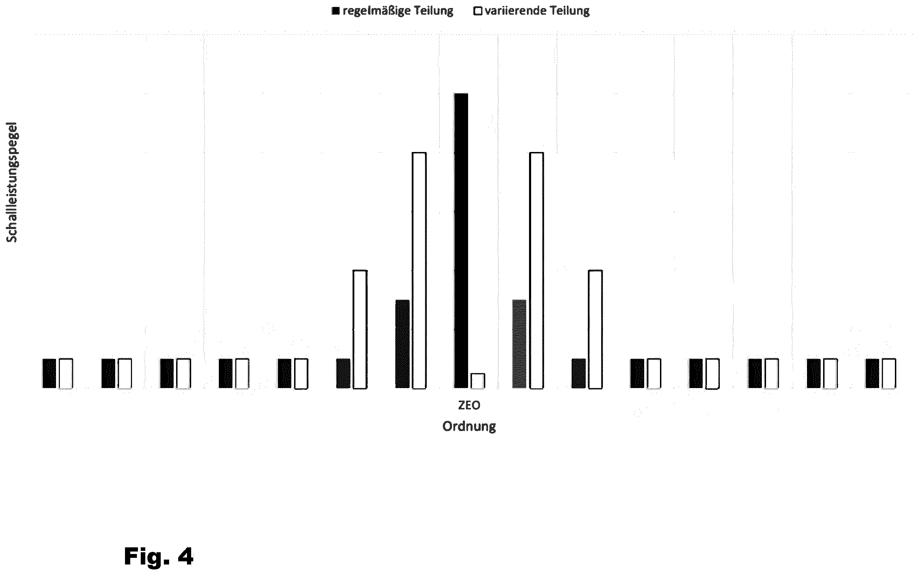

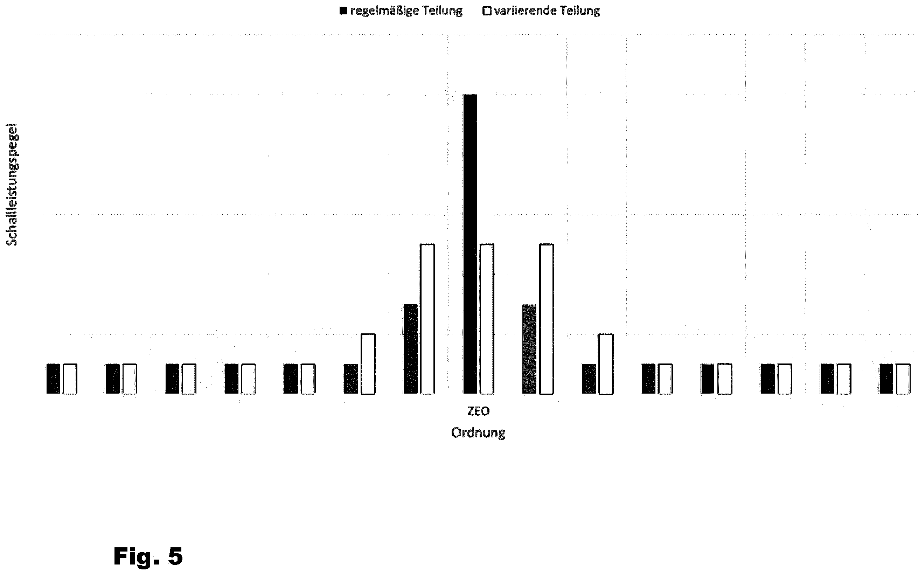

Wird das Geräusch eines Zahntriebes einer Ordnungsanalyse unterzogen, so betrachtet man den Energiegehalt des Geräusches über eine "Ordnung", bei Zahnriementrieben über eine Ordnung, die gebildet wird aus einem Frequenzspektrum, welches mittels einer Fast-Fourier-Transformation (FFT) berechnet wird. So kann mit einer FFT ein Ordnungsspektrum abgebildet werden, an dem mit bestimmten mitlaufenden Berechnungen/Filtern der Pegel oder die Amplitude jeder Ordnung bestimmt werden kann. Dies erfolgt sowohl bei der Frequenz des Zahneingriffs, der Zahneingriffsordnung, sowie bei einer Reihe von Nebenordnungen. Damit erhält man die in den Fig. 4 und 5 dargestellten Diagramme, welche die Amplitude des Schallleistungspegels eines Riementriebs mit Zahnscheibe und Zahnriemen in spektralen Ordnungen zeigt.

In der Figur 4 ist ein Diagramm dargestellt, welches die Amplitude des Schallleistungspegels eines Riementriebs mit regelmäßigen Teilungen an Zahnscheibe und Zahnriemen aus dem Stand der Technik im Vergleich zu einem erfindungsgemäßen Riementrieb in spektralen Ordnungen zeigt. Hierbei ist der Pegel der Zahneingriffsordnung (ZEO) durch eine erfindungsgemäße Folge variierender Teilungen am Zahnriemen auf einen Bruchteil reduziert, wobei allerdings die Pegel mehrerer Nebenordnungen den Pegel der Zahneingriffsordnung (ZEO) überschreiten.

In der Figur 5 ist ein Diagramm dargestellt, welches wiederum die Amplitude des Schallleistungspegels eines Riementriebs mit regelmäßigen Teilungen an Zahnscheibe und Zahnriemen aus dem Stand der Technik im Vergleich zu einem erfindungsgemäßen Riementrieb in spektralen Ordnungen zeigt. Hierbei ist der Pegel der Zahneingriffsordnung (ZEO) durch eine andere erfindungsgemäße Folge variierender Teilungen am Zahnriemen zwar reduziert, aber die Pegel aller Nebenordnungen überschreiten den der Zahneingriffsordnung (ZEO) nicht.

### Bezugszeichenliste

### (Teil der Beschreibung)

- 1: Zahnriementrieb
- 2: Zahnriemen
- 3: Zahnscheibe (Abtriebsscheibe)
- 4: Zahnscheibe (Antriebsscheibe)
- 5: Einlaufbereich
- 6: Cordmitte

- *e_{S}*: Breite einer Zahnlücke
- *e_{R}*: Breite des eingreifenden Riemenzahns auf Mitte der Zahnhöhe
- P: Nennteilung
- P2: variierende Teilung des Zahnriemens 2
- P4: regelmäßige Teilung der Zahnscheibe 4

## Patentansprüche

1. Zahnriementrieb (1) mit einem Zahnriemen (2) und mindestens zwei Zahnscheiben (3, 4), wobei der Zahnriemen (2) mindestens eine mit einem Zahnprofil versehene Antriebsseite aufweist, der Zahnriemen (2) die Zahnscheiben (3, 4) über einen Teilbereich ihres Umfangs umschlingt und die Zähne des Zahnriemens (2) in die Zahnlücken der Zahnscheiben (3, 4) kämmend eingreifen, **dadurch gekennzeichnet, dass** mindestens eine der Verzahnungen an Riemen oder Scheibe als eine Folge entlang des Umfangs variierender Zahnteilungen ausgebildet ist, wobei
- die einzelnen Zahnteilungen relativ zur mittleren Zahnteilung an Riemen oder Scheibe bis maximal 5% variierend ausgebildet sind und
- die absolute Abweichung einer variierten Zahnteilung von der mittleren Zahnteilung an Riemen oder Scheibe durch die Lückenluft der Verzahnung begrenzt ist,
wobei die Lückenluft sich ergibt aus der Differenz der Breite (*e_{S})* der Zahnlücken der jeweiligen Zahnscheibe (3, 4) und der Breite (*e_{R})* der Zähne des Zahnriemens (2) auf Mitte der Zahnhöhe der Zähne des Zahnriemens (2).

2. Zahnriementrieb (1) nach Anspruch 1, bei dem die variierende Zahnteilung an Riemen oder Scheibe periodisch oder nach einem vorgegebenen Muster ausgebildet ist.

3. Zahnriementrieb (1) nach Anspruch 1 oder 2, bei dem die variierende Zahnteilung an Riemen oder Scheibe relativ zur mittleren Teilung in entweder positiver oder negativer Richtung ausgebildet ist.

4. Zahnriementrieb (1) nach einem der Ansprüche 1 bis 3, bei dem der Zahnriemen (2) oder die Zahnscheibe (3, 4) mit einer variierenden Zahnteilung und der jeweils andere Teil mit einer regelmäßigen Zahnteilung ausgebildet sind.

5. Zahnriementrieb (1) nach einem der Ansprüche 1 bis 4, bei dem der Zahnriemen (2) und die Zahnscheibe (3, 4) mit einer variierenden Zahnteilung ausgebildet sind.

6. Zahnriementrieb (1) nach einem der Ansprüche 1 bis 5, bei dem variierende Teilungen so angeordnet werden, dass sich ein möglichst niedriger Pegel in der Zahneingriffsordnung (ZEO) ergibt.

7. Zahnriementrieb (1) nach einem der Ansprüche 1 bis 6, bei dem die sich aus der gezielten Anordnung der variierenden Zahnteilungen ergebenden Pegel der der Zahneingriffsordnung (ZEO) benachbarten Ordnungen diese nicht übersteigen.

8. Elektrisches Lenkhilfegetriebe für Kraftfahrzeuge mit einem Zahnriementrieb (1) nach einem der Ansprüche 1 bis 7.

9. Formwerkzeug zur Herstellung eines Zahnriemens (2) für einen Zahnriementrieb (1) nach einem der Ansprüche 1 bis 7, wobei das Formwerkzeug so ausgebildet ist, dass die für die Riemenzähne formgebende Verzahnung des Werkzeugs mit einer Folge variierender Zahnteilungen ausgebildet ist, die in Längs- oder im späteren Betrieb sich ausbildenden Umfangsrichtung des Riemens relativ zu der mittleren Zahnteilung des Riemens auf Höhe der durch die Cordmitte (6) laufenden Cord-Wirklinie, der im späteren Betrieb auf Höhe des Scheibenkopfkreises sich ergebenden Eingriffsteilung und der Teilung bei mittlerer Zahnhöhe bis maximal 5% variierend ausgebildet sind, wobei die absolute Abweichung dieser variierenden Zahnteilungen durch die absolute Lückenluft begrenzt ist, wobei die Lückenluft definiert ist als die Differenz aus der sich im späteren Betrieb ergebenden Breite einer Zahnlücke der Scheibe und der Breite des eingreifenden Riemenzahns auf Mitte der Zahnhöhe.

## Claims

1. Toothed belt drive (1) with a toothed belt (2) and at least two toothed pulleys (3, 4), wherein the toothed belt (2) has at least one drive side provided with a toothed profile, the toothed belt (2) wraps around the toothed pulleys (3, 4) over a partial area of their circumference and the teeth of the toothed belt (2) meshingly engage in the tooth gaps of the toothed pulleys (3, 4), **characterized in that** at least one of the toothings on the belt or pulley is formed as a series of tooth pitches varying along the circumference, wherein
- the individual tooth pitches are designed to vary by up to a maximum of 5% relative to the mean tooth pitch on the belt or pulley, and
- the absolute deviation of a varied tooth pitch from the mean tooth pitch on the belt or pulley is limited by the backlash of the toothing,
wherein the backlash results from the difference of the width (es) of the tooth gaps of the respective toothed pulley (3, 4) and the width (*e_{R}*) of the teeth of the toothed belt (2) in the middle of the tooth height of the teeth of the toothed belt (2).

2. Toothed belt drive (1) according to Claim 1, in which the varying tooth pitch on the belt or pulley is formed periodically or according to a predetermined pattern.

3. Toothed belt drive (1) according to Claim 1 or 2, in which the varying tooth pitch on the belt or pulley is formed in either the positive or negative direction relative to the mean pitch.

4. Toothed belt drive (1) according to one of Claims 1 to 3, in which the toothed belt (2) or the toothed pulley (3, 4) is designed with a varying tooth pitch and the respective other part is designed with a regular tooth pitch.

5. Toothed belt drive (1) according to one of Claims 1 to 4, in which the toothed belt (2) and the toothed pulley (3, 4) are designed with a varying tooth pitch.

6. Toothed belt drive (1) according to one of Claims 1 to 5, in which varying pitches are arranged in such a way that the lowest possible level in the tooth meshing order (TMO) results.

7. Toothed belt drive (1) according to one of Claims 1 to 6, in which the levels of the orders adjacent to the tooth meshing order (TMO) resulting from the specific arrangement of the varying tooth pitches do not exceed this.

8. Electric power steering gear for motor vehicles having a toothed belt drive (1) according to one of Claims 1 to 7.

9. Mould for producing a toothed belt (2) for a toothed belt drive (1) according to one of Claims 1 to 7, wherein the mould is designed in such a way that the toothing of the mould that forms the belt teeth is formed with a series of varying tooth pitches which, in the belt circumferential direction formed in longitudinal or subsequent operation, are designed to vary by up to a maximum of 5% relative to the mean tooth pitch of the belt at the height of the effective cord line running through the cord centre (6), the mesh pitch that results in subsequent operation at the height of the pulley tip circle, and the pitch at mean tooth height, wherein the absolute deviation of these varying tooth pitches is limited by the absolute backlash, wherein the backlash is defined as the difference of the width, resulting in subsequent operation, of a tooth gap of the pulley and the width of the engaging belt tooth in the middle of the tooth height.

## Revendications

1. Transmission par courroie dentée (1) avec une courroie dentée (2) et au moins deux poulies dentées (3, 4), la courroie dentée (2) présentant au moins un côté d'entraînement pourvu d'un profil denté, la courroie dentée (2) entourant les poulies dentées (3, 4) sur une zone partielle de leur périphérie et les dents de la courroie dentée (2) s'engrenant dans les entredents des poulies dentées (3, 4), **caractérisée en ce qu'**au moins l'une des dentures sur la courroie ou la poulie est réalisée sous la forme d'une succession de pas de denture variant le long de la périphérie,
- les pas de denture individuels étant réalisés de manière à varier jusqu'à 5 % au maximum par rapport au pas de denture moyen sur la courroie ou la poulie et
- l'écart absolu d'un pas de denture varié par rapport au pas de denture moyen sur la courroie ou la poulie étant délimité par le jeu entre dents de la denture,
le jeu entre dents de la denture résultant de la différence entre la largeur (*e_{S}*) de l'entredent de chaque poulie dentée (3, 4) et la largeur (*e_{R}*) des dents de la courroie dentée (2) au milieu de la hauteur de dent des dents de la courroie dentée (2).

2. Transmission par courroie dentée (1) selon la revendication 1, dans laquelle le pas de denture variable sur la courroie ou la poulie est réalisé de manière périodique ou selon un modèle prédéterminé.

3. Transmission par courroie dentée (1) selon la revendication 1 ou 2, dans laquelle le pas de denture variable sur la courroie ou la poulie est réalisé dans une direction soit positive soit négative par rapport au pas moyen.

4. Transmission par courroie dentée (1) selon l'une quelconque des revendications 1 à 3, dans laquelle la courroie dentée (2) ou la poulie dentée (3, 4) est réalisée avec un pas de denture variable et l'autre partie est réalisée avec un pas de denture régulier.

5. Transmission par courroie dentée (1) selon l'une quelconque des revendications 1 à 4, dans laquelle la courroie dentée (2) et la poulie dentée (3, 4) sont réalisées avec un pas de denture variable.

6. Transmission par courroie dentée (1) selon l'une quelconque des revendications 1 à 5, dans laquelle les pas variables sont agencés de manière à obtenir le niveau le plus bas possible dans l'ordre d'engrènement des dents (ZEO).

7. Transmission par courroie dentée (1) selon l'une quelconque des revendications 1 à 6, dans laquelle les niveaux des ordres voisins de l'ordre d'engrènement des dents (ZEO) résultant de l'agencement ciblé des pas de denture variables ne dépassent pas ce dernier.

8. Mécanisme de direction assistée électrique pour véhicules automobiles avec une transmission par courroie dentée (1) selon l'une quelconque des revendications 1 à 7.

9. Outil de formage pour la fabrication d'une courroie dentée (2) pour une transmission par courroie dentée (1) selon l'une quelconque des revendications 1 à 7, l'outil de formage étant réalisé de telle sorte que la denture de l'outil formant les dents de la courroie est réalisée avec une succession de pas de denture variables, la direction périphérique de la courroie se développant en fonctionnement long ou ultérieur par rapport au pas de denture moyen de la courroie à hauteur de la ligne d'action de corde passant par le centre de corde (6), le pas d'engrènement résultant en fonctionnement ultérieur à hauteur du cercle de tête de la poulie et le pas à la hauteur de dent moyenne sont réalisés de manière à varier jusqu'à 5 % au maximum, l'écart absolu de ces pas de denture variables étant limité par le jeu entre dents absolu, le jeu entre dents étant défini comme la différence entre la largeur d'un entredent de la poulie résultant en fonctionnement ultérieur et la largeur de la dent de la courroie engrenant au milieu de la hauteur de dent.
